# EUROPÄISCHE PATENTSCHRIFT

(11) **EP 4 414 215 B1**
(45) Veröffentlichungstag und Bekanntmachung des Hinweises auf die Patenterteilung: **22.04.2026**
(21) Anmeldenummer: 24155866.7
(22) Anmeldetag: 05.02.2024
(51) Int. Cl.: B60P 7/08

(54) **VORRICHTUNG ZUM SPANNEN EINES SPANNGURTS**
DEVICE FOR TENSIONING A TENSIONING STRAP
DISPOSITIF DE TENSION D'UNE SANGLE DE SERRAGE

(30) Priorität: 07.02.2023 DE 102023102919
(43) Veröffentlichungstag der Anmeldung: 14.08.2024
(73) Patentinhaber: SmartLash UG (haftungsbeschränkt), 34431 Marsberg (DE)
(72) Erfinder: TUSCHE, Ralph, 34431 Marsberg (DE); SIEBERS, Benjamin, 34431 Marsberg (DE)
(74) Vertreter: Wickord, Wiro

(56) Entgegenhaltungen:
- WO-A1-2019/213213
- DE-U1- 202012 103 396
- GB-A- 673 268

## Beschreibung

Die Erfindung betrifft eine Vorrichtung zum Spannen und Entspannen eines der Ladungssicherung dienenden Spanngurts.

Bekannte Vorrichtungen zum Spannen beziehungsweise Entspannen eines Spanngurts verwenden manuell betätigbare Ratschen, welche über einen verschränkbaren Hebel verfügen, der mit einer rotierenden Welle zusammenwirkt. Auf der Welle wird der Spanngurt aufgewickelt und infolge dessen verkürzt sich die wirksame Länge des Spanngurts und die Ladung wird gesichert. Insbesondere im Lieferverkehr, bei dem am Tag mehrere Abnehmer angefahren und jeweils ein Teil der Ladung abgeladen wird, geht die mechanische Betätigung der Ratsche mit einer erhöhten körperlichen Belastung für den Fahrer einher. Da die Ratsche üblicherweise oberhalb der Schulterpartie des seitlich neben oder hinter dem Fahrzeug stehenden Fahrers angeordnet ist, ist darüber hinaus die Körperhaltung ungünstig mit der Folge, dass die Arbeit auf Dauer zu körperlichen Schäden führen kann.

Aus der US 2020/0262331 A1 ist für den Bereich der Sicherung schwerer Lasten überdies eine aktuatorisch betätigbare Sicherungsvorrichtung bekannt, die dazu dient, eine der Ladungssicherung dienende Metallkette zu spannen. Hier wird über eine rotierende Spindel die Länge einer Spannvorrichtung variiert.

Weitere Spindelspannvorrichtungen sind aus der WO 2019/213213 A1 und der DE 20 2012 103 396 U1 bekannt.

Aufgabe der Erfindung ist es, eine einfach zu handhabende, mobile Spannvorrichtung für einen Spanngurt anzugeben.

Zur Lösung der Aufgabe weist die Erfindung die Merkmale des Patentanspruchs 1 auf.

Der besondere Vorteil der Erfindung besteht darin, dass eine der Ladungssicherung im Lieferverkehr dienende Vorrichtung zum Spannen eines Spanngurts über ein handgeführtes elektrisches Betätigungsgerät, beispielsweise einen Akkuschrauber, betätigbar ist. Die körperliche Belastung für den Fahrer beziehungsweise Benutzer reduziert sich hierdurch in erheblichem Maße. Darüber hinaus ist es möglich, ein und dasselbe Betätigungsgerät zum Spannen beziehungsweise Entspannen einer Vielzahl von Spannvorrichtungen zu nutzen. Die erfindungsgemäße Vorrichtung ist dabei als eine mechanische Vorrichtung ohne aktuatorische Elemente kostengünstig ausgeführt.

Der aus dem Gehäusemodul herausgeführte Kupplungsstutzen der erfindungsgemäßen Spannvorrichtung kann auf einer dem Fahrer beziehungsweise Benutzer zugewandten Seite gut zugänglich angeordnet sein. Das Betätigungsgetriebe, welches den Kupplungsstutzen vorsieht und die Spindel rotiert, stellt die zur benutzerfreundlichen Orientierung des Kupplungsstutzens notwendige rechtwinklige Orientierung der Betätigungsachse zur Spindellängsachse bereit. Die Spindel selbst kann dabei zwischen der ersten und zweiten Aufnahme vorgesehen sein mit der Folge, dass auf die Spindel im Wesentlichen oder ausschließlich Längskräfte wirken. Querkräfte werden reduziert beziehungsweise vermieden und einer Verformung beziehungsweise Beschädigung der Vorrichtung ist entgegengewirkt.

Nach einer bevorzugten Ausführungsform der Erfindung liegen die erste Aufnahme beziehungsweise die zweite Aufnahme zumindest abschnittsweise in einer die Spindellängsachse aufnehmenden und senkrecht zu der Betätigungsachse liegenden Spannebene. Hierdurch werden die Querkräfte auf die Spindel weiter reduziert beziehungsweise gänzlich vermieden. Vorteilhaft kann die Vorrichtung hierdurch mit geringen Kräften betätigt werden und einer Beschädigung beziehungsweise Schwergängigkeit ist noch wirkungsvoll entgegengewirkt.

Nach einer Weiterbildung der Erfindung ist ein in eine Richtung der Betätigungsachse bestimmter Abstand zwischen einem ersten Zugkraftangriffspunkt der Vorrichtung, welcher der ersten Aufnahme zugeordnet ist, und einem zweiten Zugkraftangriffspunkt der Vorrichtung, welcher der zweiten Aufnahme zugeordnet ist, nicht größer als ein Außendurchmesser der Spindel. Hier hat sich bei der Erprobung der Erfindung vorteilhaft gezeigt, dass ein in dieser Größenordnung bemessener Abstand der Zugkraftangriffspunkte zu einer die Lebensdauer der Spindel nicht wesentlich beschränkenden Querkraft führt und Beschädigungen der Vorrichtung vorbeugt.

Nach einer Weiterbildung der Erfindung ist ein Schneckengetriebe als Betätigungsgetriebe vorgesehen. Das Schneckengetriebe sieht ein Schneckenrad und eine Schneckenwelle vor, wobei das Schneckenrad koaxial zur Spindellängsachse vorgesehen ist und drehfest mit der Spindel zusammenwirkt. Die Spindelwelle ist bevorzugt einstückig mit dem Kupplungsstutzen ausgeführt. Vorteilhaft ergibt sich durch die Verwendung des Schneckengetriebes ein kompakter Aufbau mit einer die Betätigung der Vorrichtung vereinfachenden großen Übersetzung. Zudem kann die Anzahl der Teile und der Montageaufwand durch die Einstückigkeit von Schneckenwelle und Kupplungsstutzen reduziert werden.

Nach einer alternativen Ausführungsform der Erfindung kann das Betätigungsgetriebe als ein Kegelradgetriebe ausgebildet sein.

Nach einer Weiterbildung der Erfindung greift das Verstellmodul unabhängig von der Position der Spindelmutter auf der Spindel zumindest abschnittsweise in das Gehäusemodul ein. Hierdurch ergibt sich eine Reduzierung der Baulänge der Vorrichtung mit der Folge, dass sie flexibel auch zum Sichern kleiner Ladungen eingesetzt werden kann. Darüber hinaus lässt sie sich insbesondere bei der Nichtverwendung sehr kompakt zusammenlegen, transportieren und/oder lagern.

Nach einer Weiterbildung der Erfindung dient die erste Aufnahme der Befestigung des Spanngurts. Die erste Aufnahme sieht hierzu einen senkrecht zu der Spindellängsachse und der Betätigungsachse erstreckten Bolzen auf, um den der Spanngurt herumgeführt ist.

Die zweite Aufnahme kann beispielsweise hakenförmig ausgebildet sein und der Befestigung der Vorrichtung an einem Anbauteil eines Fahrzeugs, beispielsweise ein Ösen oder Ausnehmungen bereitstellenden Ladeplattform des Fahrzeugs, dienen.

Nach der Erfindung sieht die Vorrichtung ein Ratschenmodul zum Vorspannen des Spannguts vor. Das Ratschenmodul ist beispielsweise an das Gehäusemodul angebaut. Es kann darüber hinaus die erste Aufnahme der Vorrichtung bereitstellen. Vorteilhaft lässt sich die Länge des Spanngurts durch das Vorsehen des Ratschen Moduls in einem erheblichen Umfang variieren und bedarfsgerecht einstellen, während zugleich der kompakte Aufbau der Vorrichtung gewahrt bleibt. Über das Ratschenmodul wird hierbei der Gurt zunächst vorgespannt. Dies kann weitgehend ohne einen erhöhten Kraftaufwand erfolgen. Das finale Spannen des Spanngurts erfolgt dann unter Zuhilfenahme des an den Kupplungsstutzen angesetzten elektrischen Betätigungsgeräts, indem das Verstellmodul relativ zum Gehäusemodul verschoben wird.

Nach einer Weiterbildung der Erfindung ist der Betätigungsstutzen mantelseitig nach Art einer Mehrkantwelle und insbesondere nach Art einer Sechskantwelle ausgebildet. Vorteilhaft kann hierdurch ein als elektrisches Betätigungsgerät dienender Akkuschrauber schnell, einfach und sicher auf den Kupplungsstutzen aufgesetzt werden und kraft- und/oder formschlüssig mit dem Betätigungsgetriebe zusammenwirken.

Nach einer Weiterbildung der Erfindung sind das Betätigungsgetriebe und/oder die Spindel mit der Spindelmutter selbsthemmend ausgebildet. Vorteilhaft kann durch das Vorsehen der Selbsthemmung einem unbeabsichtigten Lösen beziehungsweise Entspannen der Vorrichtung entgegengewirkt werden.

Alternativ oder zusätzlich kann eine Verriegelung vorgesehen sein zum mechanischen Arretieren der Vorrichtung in einem Verspannungszustand, in dem die Ladung durch den Spanngurt gegen ein Verrutschen gesichert ist.

Aus den weiteren Unteransprüchen und der nachfolgenden Beschreibung sind weitere Vorteile, Merkmale und Einzelheiten der Erfindung zu entnehmen.

Die Zeichnungen dienen lediglich beispielhaft der Klarstellung der Erfindung. Sie haben keinen einschränkenden Charakter. Es zeigen:
- Fig. 1: eine perspektivische Teilansicht einer erfindungsgemäßen Vorrichtung zum Spannen eines Spanngurts in einer ersten Ausführungsform,
- Fig. 2: eine Längsseitenansicht der Vorrichtung in der ersten Ausführungsform,
- Fig. 3: eine Aufsicht der Vorrichtung in der ersten Ausführungsform,
- Fig. 4: einen Schnitt A-A durch die Vorrichtung in der ersten Ausführungsform,
- Fig. 5: eine Stirnseitenansicht der Vorrichtung in der ersten Ausführungsform,
- Fig. 6: eine perspektivische Ansicht der erfindungsgemäßen Vorrichtung zum Spannen eines Spanngurts in einer zweiten Ausführungsform,
- Fig. 7: eine Längsseitenansicht der Vorrichtung in der zweiten Ausführungsform,
- Fig. 8: eine Aufsicht der Vorrichtung in der zweiten Ausführungsform,
- Fig. 9: einen Schnitt B-B durch die Vorrichtung in der zweiten Ausführungsform,
- Fig. 10: eine Stirnseitenansicht der Vorrichtung in der zweiten Ausführungsform,
- Fig. 11: eine perspektivische Darstellung der Verwendung der Vorrichtung in der zweiten Ausführungsform zum Sichern einer Gitterbox auf einer Ladeplattform und
- Fig. 12: eine Seitenansicht der Verwendungssituation nach Fig. 11.

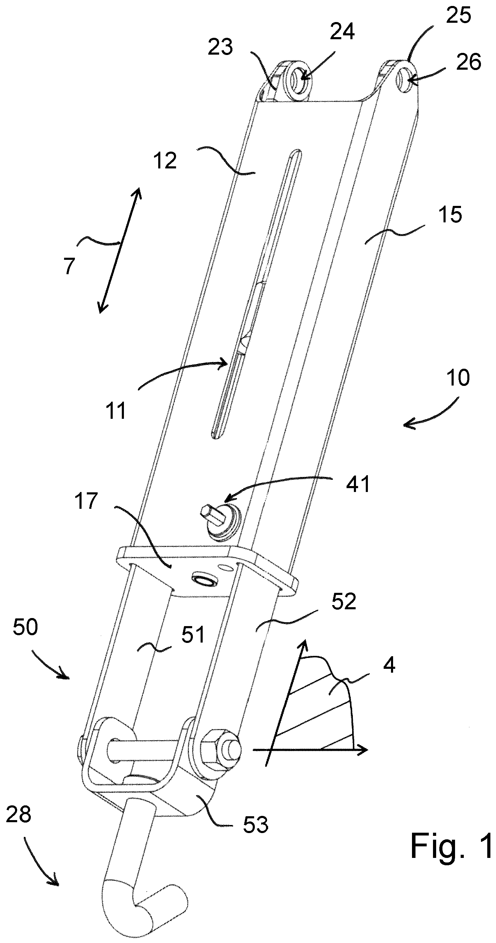

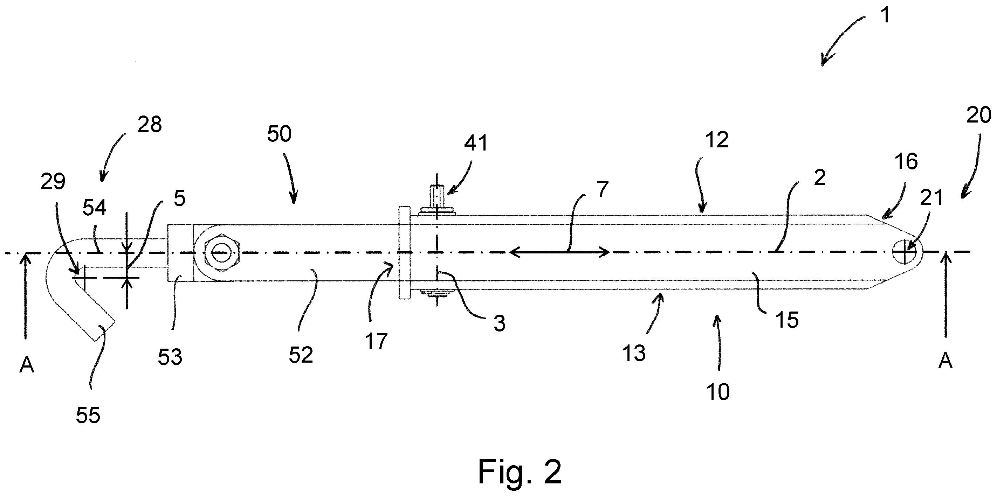

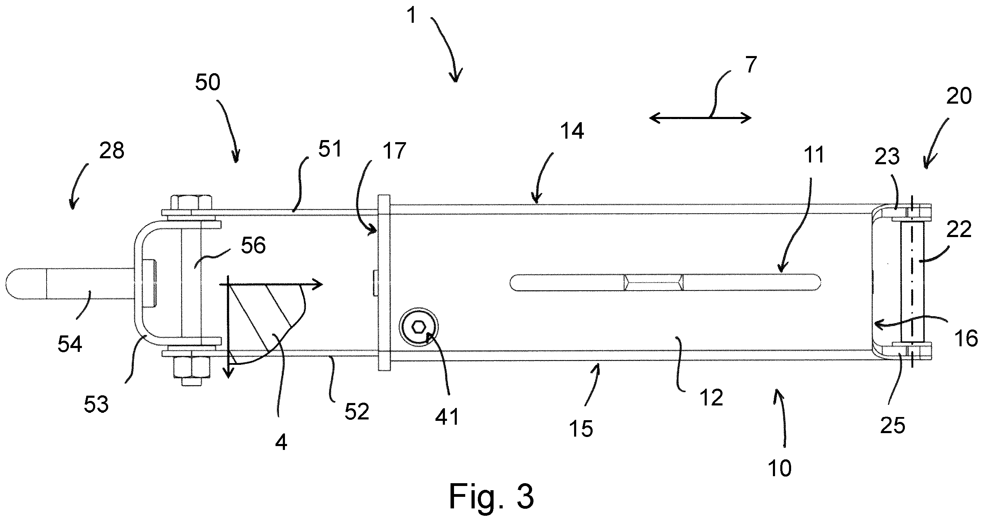

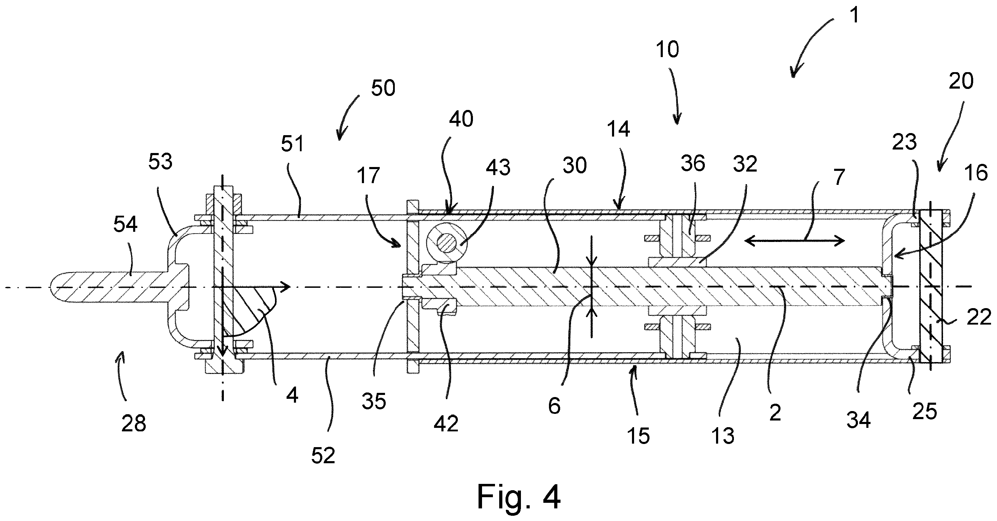

Nach einer ersten Ausführungsform der erfindungsgemäßen Vorrichtung, die in Figur 1 als perspektivische Teilansicht und darüber hinaus in den Figuren 2 bis 5 dargestellt ist, sind ein im Wesentlichen quaderförmiges Gehäusemodul 10, welches eine erste Aufnahme 20 bereitstellt, sowie ein relativ zu dem Gehäusemodul 10 verschiebbares, an diesem abgestütztes und in dieses eingreifendes Verstellmodul 50 mit der zweiten Aufnahme 28 als geometriebestimmende Komponente vorgesehen. Das Gehäusemodul 10 nimmt eine um eine Spindellängsachse 2 rotierbare Spindel 30 mit einer daran geführten Spindelmutter 32 sowie ein Betätigungsgetriebe 40 auf, welches vorliegend als Schneckengetriebe ausgebildet ist und eine um 90° zu der Spindellängsachse 2 gedrehte Betätigungsachse 3 besitzt. Das Gehäusemodul 10 ist in Bezug aus einer quaderförmigen Geometrie durch zwei einander beabstandet und parallel gegenüberliegende Flachseiten 12, 13, zwei die Flachseiten 12, 13 verbindende, zueinander parallele und in eine Richtung 7 der Spindellängsachse 2 erstreckte Längsseiten 14, 15 und zwei einander parallel und beabstandet gegenüberliegende Stirnseiten 16, 17 definiert.

An einer gemeinsamen ersten Flachseite 12 sind eine in die Richtung 7 der Spindellängsachse 2 orientierte schlitzförmige Ausnehmung 11 sowie benachbart hierzu ein Kupplungsstutzen 41 vorgesehen. Durch die schlitzförmige Ausnehmung 11 hindurch kann eine Position der Spindelmutter 32 auf der Spindel 30 visuell erfasst werden.

Der Kupplungsstutzen 41 ist als Teil einer Schneckenwelle 43 des Schneckengetriebes 40 ausgeführt und aus dem Gehäusemodul 10 herausgeführt. Er ist an einem freien Ende desselben als Sechskantwelle ausgebildet und dient dazu, mit einem in den Zeichnungen nicht dargestellten und nicht zur erfindungsgemäßen Vorrichtung gehörenden handgeführten elektrischen Betätigungsgerät, beispielsweise einem Akkuschrauber, verbunden zu werden.

Als zweite Komponente sieht das Schneckengetriebe 40 ein Schneckenrad 42 vor, welches koaxial zur Spindellängsachse 2 angeordnet und drehfest mit der Spindel 30 verbunden ist. Sofern über das elektrische Betätigungsgerät, welches an den Kupplungsstutzen 41 angesetzt ist, die Schneckenwelle 43 in Rotation versetzt wird, rotieren das rechtwinklig zu der Betätigungsachse 3 orientierte Schneckenrad 42 und die Spindel 30 mit und die Spindelmutter 32 verändert ihre Position auf der Spindel 30. Dabei verändert sich mit der Position der Spindelmutter 32 in Abhängigkeit einer von dem elektrischen Betätigungsgerät vorgegebenen Drehrichtung ein in die Richtung 7 der Längsspindelachse 2 bestimmte Abstand zwischen der ersten Aufnahme 20 und der zweiten Aufnahme 28 beziehungsweise eine in die Richtung 7 bestimmte Länge der Vorrichtung 1.

Die Spindelmutter 32 ist über eine Traverse 36 an dem Verstellmodul 50 abgestützt. Die Spindel 30 ist über zwei Gleitlagerbuchsen 34, 35 an den Stirnseiten 16, 17 des Gehäusemoduls 10 gelagert.

Das Verstellmodul 50 ist U-förmig ausgebildet. Es sieht zwei freie Schenkel 51, 52 vor, welche einander beabstandet und parallel gegenüber liegen, in das Gehäusemodul 10 eingreifen und in die Richtung 7 der Spindellängsachse 2 längserstreckt sind. Über die Traverse 36 sind die Schenkel 51, 52 des Verstellmoduls 50 miteinander verbunden.

Außerhalb des Gehäusemoduls 10 sind die einander gegenüberliegenden Schenkel 51, 52 durch einen Steg 53 verbunden. Der Steg 53 ist drehbar an den Schenkeln 51, 52 festgelegt. Er sieht einen mit dem Steg 53 drehbaren Bolzen 56 vor, welcher den Abstand der Schenkel 51, 52 zueinander definiert und dem Verstellmodul 50 Festigkeit beziehungsweise Steifigkeit gibt.

Die Schenkel 51, 52 des Verstellmoduls 50 ragen über zwei an einer zweiten Stirnseite 17 gebildete Durchlassausnehmungen in das Gehäusemodul 10 und sind an diesem längs geführt. Außerhalb des Gehäusemoduls 10 sieht das Verstellmodul 50 die zweite Aufnahme 28 vor. Die zweite Aufnahme 28 ist hakenförmig gebildet. Ein von dem Steg 53 abragender Verbindungsabschnitt 54 der zweiten Aufnahme 28 ist in einer Grunddrehstellung des Stegs 53 koaxial zur Spindellängsachse 2 orientiert. Ein auf einer dem Steg 53 gegenüberliegenden Seite des Verbindungsabschnitts 54 vorgesehener freier Abschnitt 55 der hakenförmigen Aufnahme 28 ragt zu einer dem Kupplungsstutzen 41 gegenüberliegenden Rückseite der Vorrichtung 1 ab, wobei die Rückseite der Vorrichtung 1 durch eine der ersten Flachseite 12 gegenüberliegende zweite Flachseite 13 definiert ist.

Die an dem Gehäusemodul 10 vorgesehene erste Aufnahme 20 umfasst einen senkrecht zu der Spindellängsachse 2 sowie senkrecht zu der Betätigungsachse 3 orientierten Bolzen 22, um den ein in den Figuren 1 bis 5 nicht dargestellter und nicht zur erfindungsgemäßen Vorrichtung gehörender Spanngurt 80 herumgeführt ist. Der Bolzen 22 definiert die Orientierung des Spanngurts 80. Er liegt in einer durch die Spindellängsachse 2 und die Betätigungsachse 3 definierten Spannebene 4.

Der Bolzen 22 wird über zwei Laschen 23, 25 mit zwei Ausnehmungen 24, 26 gehalten. Die Laschen 23, 25 und die daran vorgesehenen Ausnehmungen 24, 26 sind in der Teilansicht der Vorrichtung 1 nach Figur 1, in der der Bolzen 22 nicht dargestellt ist, erkennbar. Die Laschen 23, 25 sind Teil der einander parallel gegenüberliegenden Längsseiten 14, 15 des Gehäusemoduls 10.

An jede der Aufnahmen 20, 28 ist ein Zugkraftangriffspunkt 21, 29 gebildet. Während ein der ersten Aufnahme 20 zugeordneter erster Zugkraftangriffspunkt 21 unmittelbar in der Spannebene 4 vorgesehen ist, liegt einer zweiter Zugkraftangriffspunkt 29 der zweiten Aufnahme 28 aufgrund der Geometrie des die zweite Aufnahme 28 formenden Hakens um einen senkrecht zu der Spannebene 4 bestimmten Abstand 5 außerhalb der Spannebene 4. Der Abstand 5 ist dabei kleiner als ein Außendurchmesser 6 der Spindel 30. In der Folge des geringen Abstands 5 sind die auf die Vorrichtung 1 beziehungsweise die Schenkel 51, 52 wirkenden Querkräfte gering beziehungsweise abhängig von einer Drehstellung des Stegs 53 null.

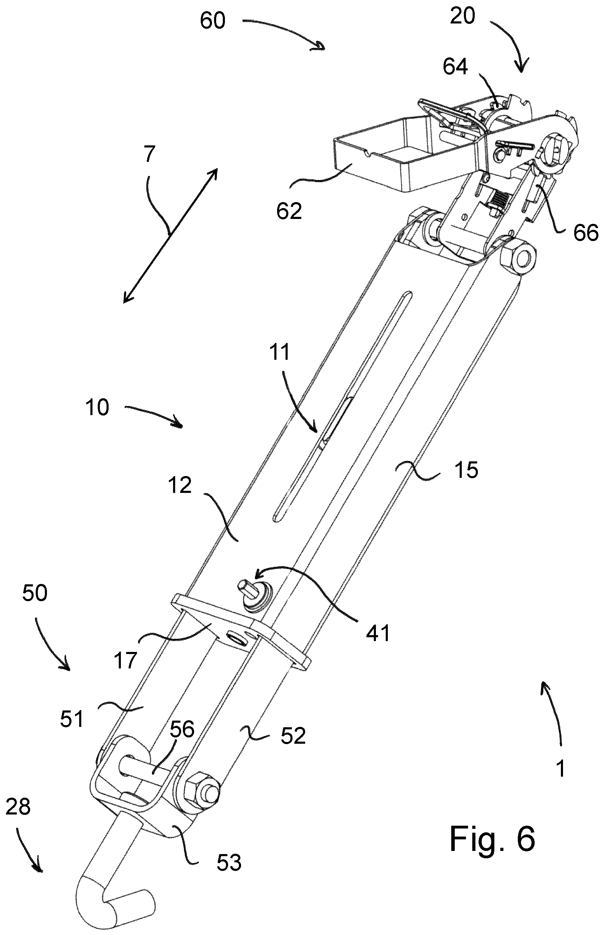

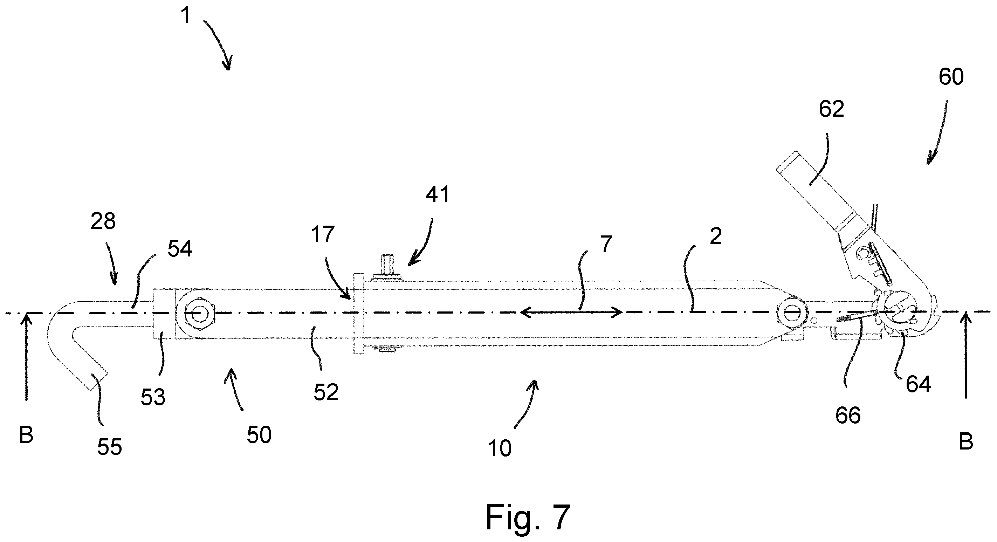

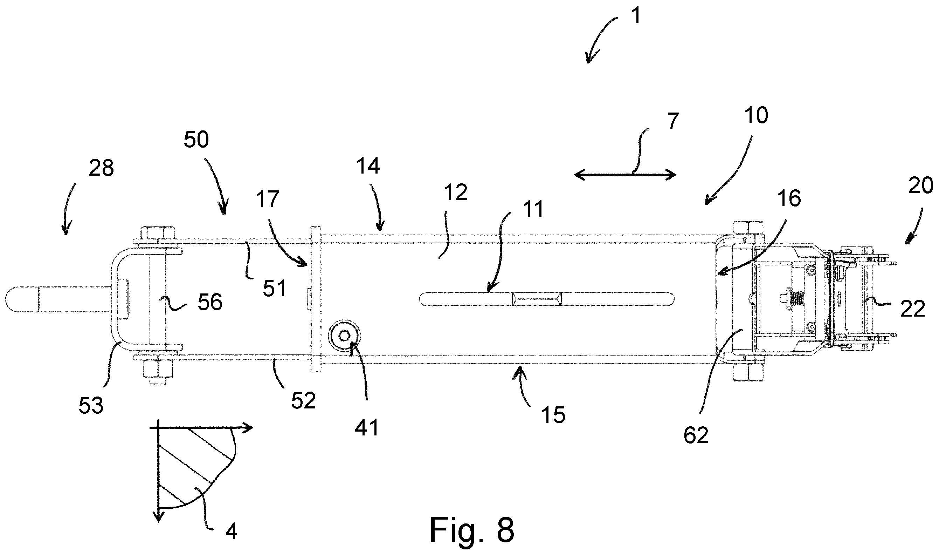

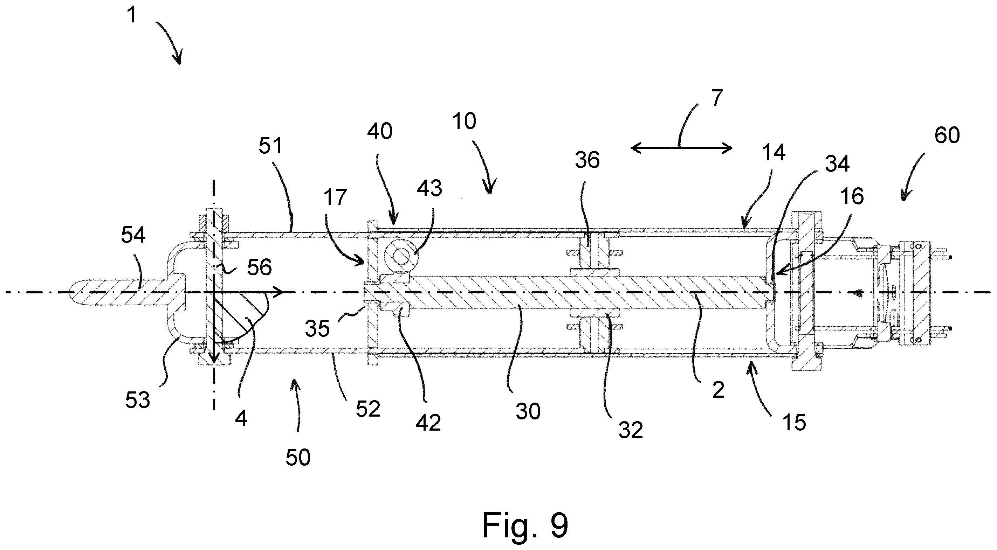

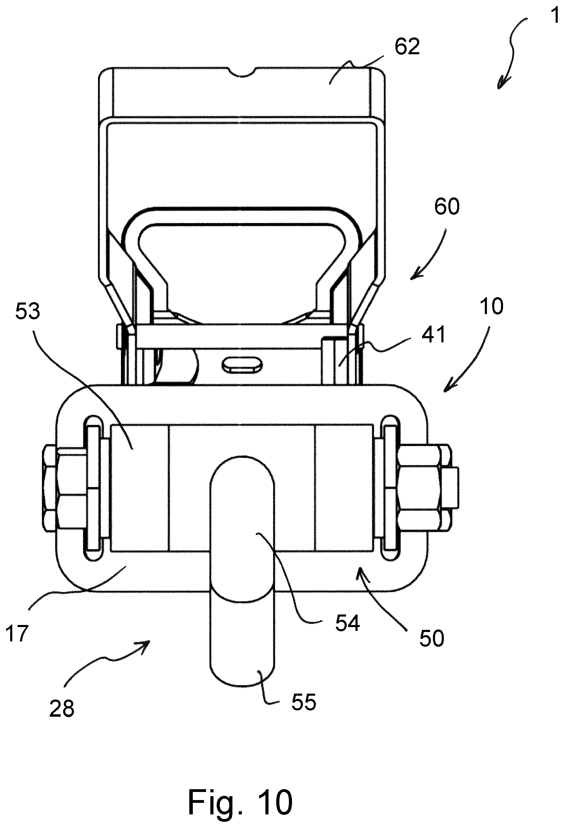

Eine zweite Ausführungsform der erfindungsgemäßen Vorrichtung zum Spannen eines Spanngurts 80 nach den Fig. 6 bis 10 umfasst die Funktionskomponente gemäß der ersten Ausführungsform der Vorrichtung 1 und zusätzlich ein an dem Gehäusemodul 10 festgelegtes Ratschenmodul 60 für den Spanngurt 80. Das Ratschenmodul 60 stellt die erste Aufnahme 20 bereit. Der Bolzen 22, um den der Spanngurt 80 herumgeführt wird, ist mit einem Betätigungshebel 62 des Ratschenmoduls 60 in eine Drehrichtung drehbar verbunden. In eine Gegenrichtung ist ein Freilauf mit einer Rücklaufsperre vorgesehen. Zur Realisierung dieser Rücklaufsperre sieht das Ratschenmodul 60 eine scheibenförmige Rücklaufsicherung 64 mit sägezahnförmigen Klinken und ein längs verschiebbares Sperrelement 66 für die Rücklaufsicherung 64 vor.

Das Ratschenmodul 60 ist vorliegend in die an den Laschen 23, 25 gebildeten Ausnehmungen 24, 26 des Gehäusemoduls 10 eingesetzt und auf diese Weise an dem Gehäusemodul 10 festgelegt.

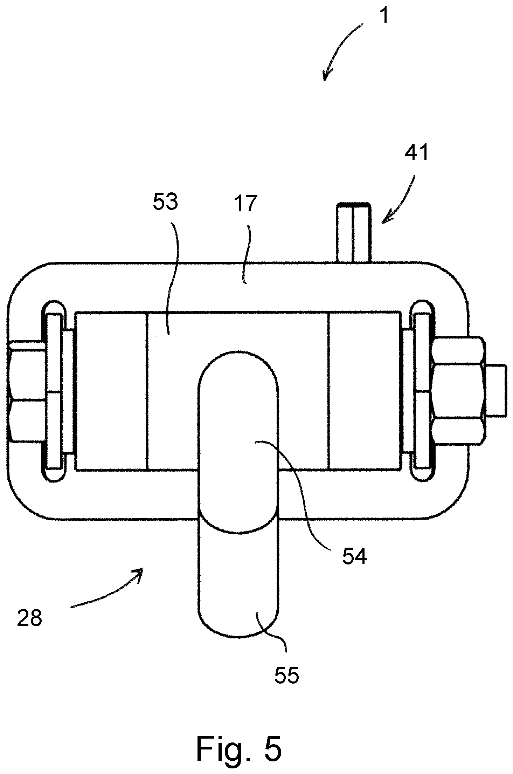

Einer alternativen, nicht dargestellten Ausführungsform der Erfindung kann das Ratschenmodul 60 als integraler Bestandteil der Vorrichtung 1 und insbesondere einstückig mit dem Gehäusemodul 10 ausgebildet sein. Die in den Figuren 5 bis 10 dargestellte Anbausituation versteht sich insofern exemplarisch.

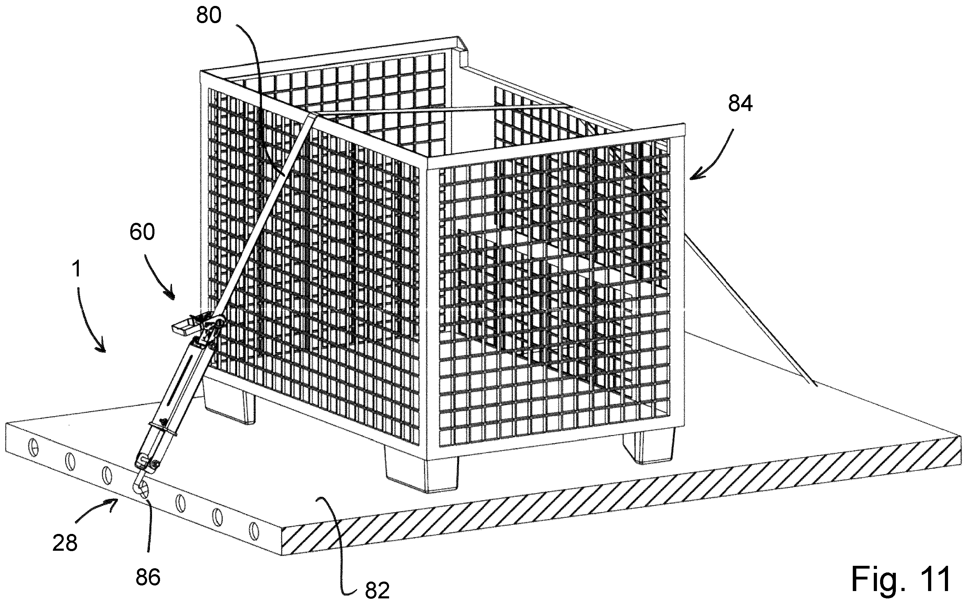

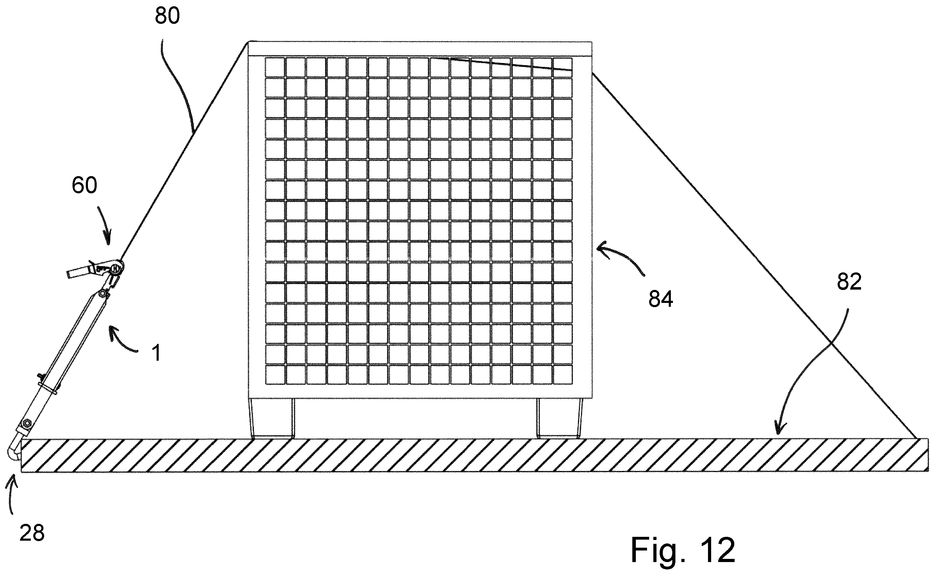

Die Figuren 11 und 12 zeigen eine Verwendungssituation der erfindungsgemäßen Vorrichtung bei der Ladungssicherung. Exemplarisch sichern der Vorrichtung 1 und des Spanngurts 80 eine Gitterbox 84 auf einer Ladeplattform 82, die beispielsweise von einem Lastkraftwagen bereitgestellt wird, gesichert. Die Vorrichtung 1 ist hierzu im Bereich der ersten Aufnahme 20 mit dem Spanngurt 80 verbunden. Die hakenförmige zweite Aufnahme 28 der Vorrichtung 1 ist in eine Ausnehmung 86 eingesetzt, die seitlich an der Ladeplattform 82 gebildet ist.

Gleiche Bauteile und Bauteilfunktionen sind durch gleiche Bezugszeichen gekennzeichnet.

### Bezugszeichenliste

- 1: Vorrichtung
- 2: Spindellängsachse
- 3: Betätigungsachse
- 4: Spannebene
- 5: Abstand
- 6: Außendurchmesser
- 10: Gehäusemodul
- 11: Ausnehmung
- 12: Flachseite
- 13: Flachseite
- 14: Längsseite
- 15: Längsseite
- 16: Stirnseite
- 17: Stirnseite
- 20: Aufnahme
- 21: Zugkraftangriffspunkt
- 22: Bolzen
- 23: Lasche
- 24: Ausnehmung
- 25: Lasche
- 26: Ausnehmung
- 28: Aufnahme
- 29: Zugkraftangriffspunkt
- 30: Spindel
- 32: Spindelmutter
- 34: Gleitlagerbuchse
- 35: Gleitlagerbuchse
- 36: Traverse
- 40: Betätigungsgetriebe
- 41: Kupplungsstutzen
- 42: Schneckenrad
- 43: Schneckenwelle
- 50: Verstellmodul
- 51: Schenkel
- 52: Schenkel
- 53: Steg
- 54: Verbindungsabschnitt
- 55: freier Abschnitt
- 56: Bolzen
- 60: Ratschenmodul
- 62: Betätigungshebel
- 64: Rücklaufsicherung
- 66: Sperrelement
- 80: Spanngurt
- 82: Ladeplattform
- 84: Gitterbox
- 86: Ausnehmung

## Patentansprüche

1. Vorrichtung (1) zum Spannen eines Spanngurts (80) umfassend
- ein Gehäusemodul (10) und eine Spindel (30), wobei die Spindel (30) in dem Gehäusemodul (10) um eine Spindellängsachse (2) rotierbar gehalten ist,
- ein Betätigungsgetriebe (40), welches zumindest abschnittsweise von dem Gehäusemodul (10) umgriffen und eingerichtet ist, die Spindel (30) in Rotation zu versetzen, und einen aus dem Gehäusemodul (10) herausgeführten Kupplungsstutzen (41) vorsieht, wobei der Kupplungsstutzen (41) eingerichtet ist, mit einem handgeführten elektrischen Betätigungsgerät verbunden zu werden,
- eine auf der Spindel (30) längsverschiebbar geführte Spindelmutter (32),
- ein relativ zu dem Gehäusemodul (10) verschiebbares und an diesem abgestütztes Verstellmodul (50), wobei das Verstellmodul (50) mit der Spindelmutter (32) derart zusammenwirkt, dass das Verstellmodul (50) infolge der Rotation der Spindel (30) zusammen mit der Spindelmutter (32) in Richtung der Spindellängsachse (1) verschoben wird,
- eine dem Gehäusemodul (10) zugeordnete erste Aufnahme (20) und eine dem Verstellmodul (50) zugeordnete zweite Aufnahme (28), wobei die Aufnahmen (20, 22) der Verbindung mit dem Spanngurt (80) und/oder dem Festlegen der Vorrichtung an einem Anbauteil dienen und ein in die Richtung der Spindellängsachse (1) bestimmter Abstand der Aufnahmen (20, 22) abhängig von einer Position der Spindelmutter (32) auf der Spindel (30) variiert,
wobei das Betätigungsgetriebe (40) als ein Winkelgetriebe ausgebildet ist mit einer zu der Spindellängsachse (1) rechtwinklig orientierten Betätigungsachse (3) und wobei die erste Aufnahme (20) und die zweite Aufnahme (28) in einer Verlängerung der Spindel (30) derselben stirnseitig auf einander gegenüberliegenden Seiten so zugeordnet sind, dass die Spindel (30) unabhängig von der Position der Spindelmutter (32) auf der Spindel (30) zwischen der ersten Aufnahme (20) und der zweiten Aufnahme (28) vorgesehen ist, **dadurch gekennzeichnet, dass** ein Ratschenmodul (60) zum Vorspannen des Gurts (80) vorgesehen ist, wobei das Ratschenmodul (60) an das Gehäusemodul (10) angebaut ist und die erste Aufnahme (20) bereitstellt.

2. Vorrichtung (1) nach Anspruch 1, **dadurch gekennzeichnet, dass** die erste Aufnahme (20) und/oder die zweite Aufnahme (28) sich zumindest abschnittsweise in einer die Spindellängsachse (2) aufnehmenden und senkrecht zu der Betätigungsachse (3) liegenden Spannebene (4) erstrecken.

3. Vorrichtung (1) nach Anspruch 1 oder 2, **dadurch gekennzeichnet, dass** ein senkrecht zu der Spindellängsachse (2) bestimmter Abstand (5) eines ersten Zugkraftangriffspunkts (21) an der ersten Aufnahme (20) und eines zweiten Zugkraftangriffspunkts (29) an der zweiten Aufnahme (28) nicht größer ist als ein Außendurchmesser (6) der Spindel.

4. Vorrichtung (1) nach einem der Anspruch 1 bis 3, **dadurch gekennzeichnet, dass** ein Schneckengetriebe als Betätigungsgetriebe (40) vorgesehen ist.

5. Vorrichtung (1) nach Anspruch 4, **dadurch gekennzeichnet, dass** das Schneckengetriebe ein Schneckenrad (42) und eine Schneckenwelle (43) vorsieht, wobei
- das Schneckenrad (42) koaxial zu der Spindellängsachse (2) vorgesehen ist und/oder drehfest zu der Spindel (30) vorgesehen ist und/oder in dem Gehäusemodul (10) vorgesehen ist und/oder
- die Schneckenwelle (43) die Betätigungsachse (3) definiert und/oder einstückig mit der Kupplungsstützen (41) ausgeführt ist.

6. Vorrichtung (1) nach einem der Ansprüche 1 bis 5, **dadurch gekennzeichnet, dass** das Verstellmodul (50) unabhängig von der Position der Spindelmutter (32) auf der Spindel (30) zumindest abschnittsweise in dem Gehäusemodul (10) vorgesehen ist.

7. Vorrichtung (1) nach einem der Anspräche 1 bis 6, **dadurch gekennzeichnet, dass** das Verstellmodul (50) U-förmig ausgebildet ist und dass die Spindelmutter (32) zwischen zwei einander gegenüberliegenden und zueinander parallelen Schenkeln (51, 52) des U-förmigen Verstellmoduls (50) vorgesehen ist.

8. Vorrichtung (1) nach einem der Ansprüche 1 bis 7, **dadurch gekennzeichnet, dass** die erste Aufnahme (20) der Befestigung des Spanngurts (80) dient und ösenförmig gebildet ist und/oder einen senkrecht zu der Spindellängsachse (2) und/oder der Betätigungsachse (3) erstreckten Bolzen (23) aufweist und/oder dass die zweite Aufnahme (28) hakenförmig ausgebildet ist und der Befestigung an dem Anbauteil (82) dient.

9. Vorrichtung (1) nach einem der Ansprüche 1 bis 8, **dadurch gekennzeichnet, dass** der Kupplungsstutzen (41) mantelseitig eine Mehrkantwellenform aufweist.

10. Vorrichtung (1) nach einem der Ansprüche 1 bis 9, **dadurch gekennzeichnet, dass** das Gehäusemodul (10) quaderförmig gebildet ist und zwei zueinander parallele und in die Spindellängsachse (2) erstreckte Flachseiten (12, 13), zwei die Flachseiten (12, 13) verbindende, ebenfalls in die Spindellängsachse (2) erstreckte Längsseiten (14, 15) sowie zwei Stirnseiten (16, 17) vorsieht.

11. Vorrichtung (1) nach Anspruch 10, **dadurch gekennzeichnet, dass** an einer der Flachseiten (12, 13) eine in die Spindellängsachse (2) erstreckte schlitzförmige Ausnehmung (11) vorgesehen ist, welche der Spindel (30) und der Spindelmutter (32) so zugeordnet ist, dass die Position der Spindelmutter (32) visuell erfassbar ist.

12. Vorrichtung (1) nach Anspruch 10 oder 11, **dadurch gekennzeichnet, dass** der Kupplungsstutzen (41) an einer der Flachseiten (12, 13) aus dem Gehäusemodul (10) herausgeführt ist und bevorzugt benachbart zu der schlitzförmigen Ausnehmung (11) vorgesehen ist.

13. Vorrichtung (1) nach einem der Ansprüche 1 bis 12, **dadurch gekennzeichnet, dass** das Gehäusemodul (10) zumindest abschnittsweise umgreift und dass das Verstellmodul (50) stirnseitig in das Gehäusemodul (10) hineingeführt ist.

14. Vorrichtung (1) nach einem der Ansprüche 1 bis 13, **dadurch gekennzeichnet, dass** das Betätigungsgetriebe (40) und/oder die Spindel (30) mit der darauf geführten Spindelmutter (32) selbsthemmend ausgeführt sind.

## Claims

1. A device (1) for tensioning a tensioning strap (80) comprising
- a housing module (10) and a spindle (30), wherein the spindle (30) is held in the housing module (10) so as to be rotatable about a spindle longitudinal axis (2),
- an actuating gear (40) which is encompassed at least in portions by the housing module (10) and is arranged to set the spindle (30) in rotation, and provides a coupling piece (41) guided out of the housing module (10), wherein the coupling piece (41) is arranged to be connected to a hand-guided electrical actuating unit,
- a spindle nut (32) guided longitudinally displaceable on the spindle (30),
- an adjusting module (50) displaceable relative to the housing module (10) and supported thereon, wherein the adjusting module (50) interacts with the spindle nut (32) in such a way that the adjusting module (50) is displaced together with the spindle nut (32) in the direction of the spindle longitudinal axis (1) as a result of the rotation of the spindle (30),
- a first receptacle (20) associated with the housing module (10) and a second receptacle (28) associated with the adjusting module (50), wherein the receptacles (20, 22) serve to connect to the tensioning strap (80) and/or to fix the device at an attachment part and a distance of the receptacles (20, 22), determined in the direction of the spindle longitudinal axis (1), varies depending on a position of the spindle nut (32) on the spindle (30),
wherein the actuating gear (40) is formed as an angular gear with an actuating axis (3) oriented at right angles to the spindle longitudinal axis (1) and wherein the first receptacle (20) and the second receptacle (28) are associated in an extension of the spindle (30) to the latter at the end faces on mutually opposite sides such that the spindle (30) is provided between the first receptacle (20) and the second receptacle (28) independently of the position of the spindle nut (32) on the spindle (30),
**characterized in that** a ratchet module (60) is provided for pre-tensioning the strap (80), the ratchet module (60) being attached to the housing module (10) and making available the first receptacle (20).

2. The device (1) according to claim 1, **characterized in that** the first receptacle (20) and/or the second receptacle (28) extend at least in portions in a tensioning plane (4) receiving the spindle longitudinal axis (2) and lying perpendicular to the actuation axis (3).

3. The device (1) according to claim 1 or 2, **characterized in that** a distance (5), determined perpendicular to the spindle longitudinal axis (2), of a first tensile force application point (21) at the first receptacle (20) and a second tensile force application point (29) at the second receptacle (28) is not larger than an outer diameter (6) of the spindle.

4. The device (1) according to any of claims 1 to 3, **characterized in that** a worm gear is provided as an actuating gear (40).

5. The device (1) according to claim 4, **characterized in that** the worm gear provides a worm wheel (42) and a worm shaft (43), wherein
- the worm wheel (42) is provided coaxially to the spindle longitudinal axis (2) and/or is provided in a rotationally fixed manner with respect to the spindle (30) and/or is provided in the housing module (10) and/or
- the worm shaft (43) defines the actuation axis (3) and/or is designed in one piece with the coupling piece (41).

6. The device (1) according to any of claims 1 to 5, **characterized in that** the adjusting module (50) is provided at least in portions in the housing module (10) independently of the position of the spindle nut (32) on the spindle (30).

7. The device (1) according to any of claims 1 to 6, **characterized in that** the adjusting module (50) is formed in a u-shape and **in that** the spindle nut (32) is provided between two legs (51, 52) of the u-shaped adjusting module (50) lying opposite one another and parallel to one another.

8. The device (1) according to any of claims 1 to 7, **characterized in that** the first receptacle (20) serves to fasten the tensioning strap (80) and is formed in an eyelet-shape and/or has a bolt (23) extending perpendicularly to the spindle longitudinal axis (2) and/or the actuation axis (3) and/or **in that** the second receptacle (28) is formed in a hook-shape and serves to fasten it to the attachment part (82).

9. The device (1) according to any of claims 1 to 8, **characterized in that** the coupling piece (41) has a polygonal shaft shape on the casing side.

10. The device (1) according to any of claims 1 to 9, **characterized in that** the housing module (10) is formed in a cuboidal shape and provides two flat sides (12, 13) parallel to one another and extending in the spindle longitudinal axis (2), two longitudinal sides (14, 15) connecting the flat sides (12, 13) and also extending in the spindle longitudinal axis (2), and two end sides (16, 17).

11. The device (1) according to claim 10, **characterized in that** a slot-shaped recess (11) extending in the spindle longitudinal axis (2) is provided on one of the flat sides (12, 13) and is associated with the spindle (30) and the spindle nut (32) such that the position of the spindle nut (32) is visually detectable.

12. The device (1) according to claim 10 or 11, **characterized in that** the coupling piece (41) is guided out of the housing module (10) on one of the flat sides (12, 13) and is preferably provided adjacent to the slot-shaped recess (11).

13. The device (1) according to any of claims 1 to 12, **characterized in that** the housing module (10) encompasses at least in portions and **in that** the adjusting module (50) is guided into the housing module (10) on the end side.

14. The device (1) according to any of claims 1 to 13, **characterized in that** the actuating gear (40) and/or the spindle (30) with the spindle nut (32) guided thereon are designed in a self-retaining manner.

## Revendications

1. Dispositif (1) de tension d'une sangle de serrage (80) comprenant
- un module boîtier (10) et une broche (30), la broche étant maintenue dans le module boîtier (10) de façon à pouvoir tourner autour d'un axe longitudinal (2) de la broche,
- un mécanisme d'actionnement (40) partiellement au moins enveloppé par le module boîtier (10) et conçu pour entraîner en rotation la broche (30), et un élément d'accouplement (41) ressortant du module boîtier (10), l'élément d'accouplement (41) étant conçu pour être relié à un appareil d'actionnement électrique,
- un écrou de broche (32) pouvant se déplacer longitudinalement sur la broche (30),
- un module d'ajustement (50) déplaçable relativement au module boîtier (10) et soutenu par celui-ci, le module d'ajustement (50) agissant conjointement avec l'écrou de broche (32) de façon à ce que, suite à la rotation de la broche (30), le module d'ajustement (50) soit déplacé avec l'écrou de broche (32) dans le sens de l'axe longitudinal de la broche (1),
- une première attache (20) affectée au module boîtier (10) et une deuxième attache (28) affectée au module d'ajustement (50), les attaches (20, 22) servant à la connexion avec la sangle de serrage (80) et/ou à la fixation du dispositif à un élément rapporté et un écartement donné des attaches (20, 22) dans le sens de l'axe longitudinal (2) de la broche variant en fonction d'une position de l'écrou de broche (32) sur la broche (30),
le mécanisme d'actionnement (40) étant réalisé sous forme d'une transmission angulaire avec un axe d'actionnement (3) d'orientation orthogonale par rapport à l'axe longitudinal (2) de la broche et la première attache (20) et la deuxième attache (28) étant, dans un prolongement de la broche (30), affectées aux extrémités de celle-ci à des côtés opposés de façon à ce que la broche (30) soit prévue entre la première attache (20) et la deuxième attache (28) indépendamment de la position de l'écrou de broche (32) sur la broche (30),
**caractérisé en ce qu'**un module à cliquet (60) est prévu pour la pré-tension de la sangle(80), le module à cliquet (60) étant monté sur le module boîtier (10) et présentant la première attache (20).

2. Dispositif (1) selon la revendication 1, **caractérisé en ce que** la première attache (20) et/ou la deuxième attache (28) s'étendent partiellement au moins dans un plan de tension (4) passant par l'axe longitudinal (2) de la broche et perpendiculaire à l'axe d'actionnement (3).

3. Dispositif (1) selon la revendication 1 ou 2, **caractérisé en ce qu'**un certain écartement (5), mesuré perpendiculairement à l'axe longitudinal (2) de la broche, d'un premier point d'application (21) de la force de traction à la première attache (20) et d'un deuxième point d'application (29) de la force de traction à la deuxième attache (28) n'est pas supérieur à un diamètre extérieur (6) de la broche.

4. Dispositif (1) selon l'une des revendications 1 à 3, **caractérisé en ce qu'**un mécanisme à vis sans fin est prévu comme le mécanisme d'actionnement (40).

5. Dispositif (1) selon la revendication 4, **caractérisé en ce que** le mécanisme à vis sans fin prévoit une roue hélicoïdale (42) et une vis sans fin (43),
- la roue hélicoïdale (42) prévue étant coaxiale à l'axe longitudinal (2) de la broche et/ou non rotative par rapport à la broche (30) et/ou étant prévue dans le module boîtier (10), et/ou
- la vis sans fin (43) définissant l'axe d'actionnement (3) et/ou étant réalisée d'un seul tenant avec l'élément d'accouplement (41).

6. Dispositif (1) selon l'une des revendications 1 à 5, **caractérisé en ce que** le module d'ajustement (50) est partiellement au moins prévu dans le module boîtier (10), indépendamment de la position de l'écrou de broche (32) sur la broche (30).

7. Dispositif (1) selon l'une des revendications 1 à 6, **caractérisé en ce que** le module d'ajustement (50) est conformé en U et que l'écrou de broche (32) est prévu entre deux flancs (51, 52) parallèles opposés l'un à l'autre du module d'ajustement (50) en U.

8. Dispositif (1) selon l'une des revendications 1 à 7, **caractérisé en ce que** la première attache (20) sert à la fixation de la sangle de serrage (80) et est réalisée en forme d'œillet et/ou présente un goujon (23) perpendiculaire à l'axe longitudinal (2) de la broche et/ou à l'axe d'actionnement (3), et/ou **en ce que** la deuxième attache (28) a une forme de crochet et sert à la fixation sur l'élément rapporté (82).

9. Dispositif (1) selon l'une des revendications 1 à 8, **caractérisé en ce que** l'élément d'accouplement (41) présente côté enveloppe une forme de tige polygonale

10. Dispositif (1) selon l'une des revendications 1 à 9, **caractérisé en ce que** le module boîtier (10) est réalisé en forme de parallélépipède et présente deux faces planes (12, 13) parallèles s'étendant selon l'axe longitudinal (2) de la broche, deux faces longitudinales (14, 15) s'étendant également selon l'axe longitudinal (2) de la broche et reliant les deux faces planes (12, 13), ainsi que faces frontales (16, 17).

11. Dispositif (1) selon la revendication 10, **caractérisé en ce qu'**une découpe (11) en forme de fente s'étendant dans le sens de l'axe longitudinal (2) de la broche est prévue dans l'une des faces planes (12, 13) et correspond à la broche (30) et à l'écrou de broche (32) de façon telle que la position de l'écrou de broche (32) puisse être déterminée visuellement.

12. Dispositif (1) selon la revendication 10 ou 11, **caractérisé en ce que** l'élément d'accouplement (41) ressort du module boîtier (10) à l'une des faces planes (12, 13) et est de préférence contigu à la découpe (11).

13. Dispositif (1) selon l'une des revendications 1 à 12, **caractérisé en ce que** le module boîtier (10) enveloppe certaines sections au moins et que le module d'ajustement (50) est inséré frontalement dans le module boîtier (10).

14. Dispositif (1) selon l'une des revendications 1 à 13, **caractérisé en ce que** le mécanisme d'actionnement (40) et/ou la broche (30) avec, guidé sur celle-ci, l'écrou de broche (32) sont réalisés sous forme autobloquante.
